# EUROPÄISCHE PATENTANMELDUNG

(11) **EP 2 521 249 A2**
(43) Veröffentlichungstag der Anmeldung: **07.11.2012**
(21) Anmeldenummer: 12166506.1
(22) Anmeldetag: 03.05.2012
(51) Int. Cl.: H02K 15/16, H02K 29/03

(54) **Verfahren zur Herstellung eines Elektromotors**

(30) Priorität: 06.05.2011 DE 102011075457
(71) Anmelder: Dunkermotoren GmbH, 79848 Bonndorf/Schwarzwald (DE)
(72) Erfinder: Tröndle, Stefan, 79848 Bonndorf (DE); Winterhalder, Andreas, 79822 Titisee-Neustadt (DE)
(74) Vertreter: Dreiss

(57) **Zusammenfassung**

Es wird ein Verfahren zur Herstellung eines Elektromotors beschrieben. Der Elektromotor weist dabei einen Rotor und einen Stator auf, die mit einander zugewandten Flächen versehen sind, zwischen denen sich ein Luftspalt befindet. Bei dem Verfahren wird eine Größe ermittelt (15), die ein Ruckmoment des Rotors repräsentiert. Es werden in Abhängigkeit von der ermittelten Größe Orts- und Mengendaten des Rotors oder des Stators ermittelt (16), die eine Materialwegnahme oder eine Materialhinzufügung beschreiben. Und es wird die Materialwegnahme oder die Materialhinzufügung an dem ermittelten Ort und mit der ermittelten Menge auf der Fläche des Rotors oder des Stators eingebracht oder aufgetragen (17).

## Beschreibung

Die Erfindung betrifft ein Verfahren zur Herstellung eines Elektromotors sowie einen entsprechend hergestellten Elektromotor. Der Elektromotor weist dabei einen Rotor und einen Stator auf, die mit einander zugewandten Flächen versehen sind, zwischen denen sich ein Luftspalt befindet,

Aus der DE 28 23 208 A1 ist ein Elektromotor bekannt, der einen permanentmagnetisch erregten, zwei oder mehrpoligen Stator und einen über einen Kommutator elektrisch ansteuerbaren, mehrpoligen Rotor aufweist. Der Rotor ist aus einem bewickelten Ankerkern aufgebaut, der mehrere T-förmig abstehende Pole aufweist. Durch die Wechselwirkung zwischen den Polen des Stators und des Rotors wird ein Ruckmoment bzw. eine Rastkraft hervorgerufen, wodurch ein gleichförmiger Rundlauf des Elektromotors verhindert wird. Zur Verminderung des Ruckmoments sind in der DE 28 23 208 A1 eine Anzahl von Einschnitten vorgesehen, die in der dem Stator zugewandten Außenfläche der T-förmigen Pole des Ankerkerns angeordnet sind. Diese Einschnitte werden vor dem Zusammenbau an vorab festgelegten Stellen in die genannten Flächen der Pole des Ankerkerns eingebracht, um danach den Ankerkern zu bewickeln und in den Elektromotor einzubauen.

Aufgabe der Erfindung ist es, ein Verfahren zu schaffen, mit dem die erläuterten Ruckmomente weitgehend vermindert werden können.

Die Erfindung löst diese Aufgabe durch ein Verfahren nach dem Anspruch 1. Die Aufgabe wird auch durch einen Elektromotor nach dem Anspruch 6 gelöst.

Bei der Erfindung wird eine Größe ermittelt, die ein Ruckmoment des Rotors repräsentiert. Dann werden in Abhängigkeit von der ermittelten Größe Orts- und Mengendaten des Rotors oder des Stators ermittelt, die eine Materialwegnahme oder eine Materialhinzufügung beschreiben. Und dann wird die Materialwegnahme oder die Materialhinzufügung an dem ermittelten Ort und mit der ermittelten Menge auf der Fläche des Rotors oder des Stators eingebracht oder aufgetragen.

Durch die erfindungsgemäße Ermittlung der Größe, die ein Ruckmoment des Rotors repräsentiert, wird der Vorteil erreicht, dass der nachfolgend ermittelten Orts- und Mengendaten für die Materialwegnahme oder die Materialhinzufügung individuell auf den jeweils vorhandenen Elektromotor ausgerichtet sind. Möglicherweise vorhandene Bauteiltoleranzen des Rotors oder des Stators oder gegebenenfalls vorhandene Inhomogenitäten der Materialzusammensetzung oder der magnetischen Eigenschaften des Rotors oder des Stators werden somit bei der Ermittlung des genannten Orts und der genannten Menge berücksichtigt. Die danach vorgenommene Materialwegnahme oder Materialhinzufügung an dem ermittelten Ort und mit der ermittelten Menge auf der Fläche des Rotors oder des Stators bewirkt somit eine individuelle Kompensation des Ruckmoments für den jeweils vorhandenen Elektromotor. Dies ist gleichbedeutend damit, dass das Ruckmoment in einem weitergehenden Umfang vermindert werden kann als beim Stand der Technik.

Besonders vorteilhaft ist es, wenn als Größe, die das Ruckmoment des Rotors repräsentiert, eine Drehzahl und/oder ein Drehmoment des Rotors verwendet wird. Damit ist es möglich, mit Hilfe von einfachen Drehzahl- oder Drehmomentsensoren das erfindungsgemäße Verfahren durchzuführen.

Weiterhin ist es besonders vorteilhaft, wenn als Ort des Rotors oder des Stators eine Winkelstellung verwendet wird. Damit ist es möglich, mit Hilfe von einfachen Winkelsensoren das erfindungsgemäße Verfahren durchzuführen. Gegebenenfalls kann dieser Winkelsensor und der vorgenannte Drehzahl- bzw. Drehmomentsensor kombiniert ausgeführt werden.

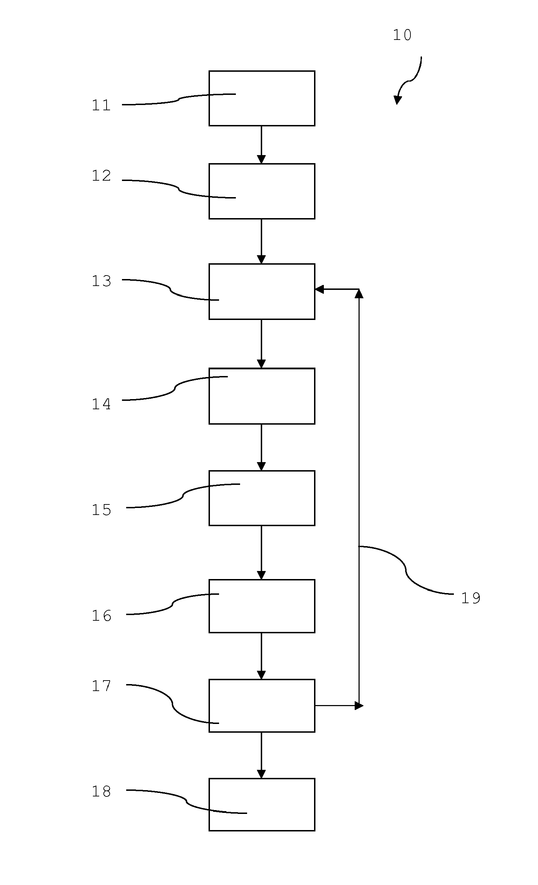

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Ablaufdiagramm eines Ausführungsbeispiels eines erfindungsgemäßen Verfahrens zur Herstellung eines Elektromotors.

Das erfindungsgemäße Verfahren ist ganz allgemein zur Herstellung von Elektromotoren anwendbar. Vorzugsweise ist das Verfahren zur Herstellung von permanentmagnetisch erregten Elektromotoren anwendbar, insbesondere von bürstenlosen, permanentmagnetisch erregten Elektromotoren.

Das nachfolgend erläuterte Ausführungsbeispiel des erfindungsgemäßen Verfahrens bezieht sich beispielhaft auf einen bürstenlosen, permanentmagnetisch erregten Elektromotor.

Es wird aber darauf hingewiesen, dass das erfindungsgemäße Verfahren auch bei Elektromotoren mit einem Kommutator oder bei sogenannten eisenlosen Elektromotoren zur Anwendung kommen kann. Ebenfalls wird darauf hingewiesen, dass das erfindungsgemäße Verfahren in gleicher Weise bei sogenannten Innen- oder Außenläufermotoren anwendbar ist.

Das nachfolgend beschriebene Ausführungsbeispiel des erfindungsgemäßen Verfahrens geht von einem Elektromotor aus, der einen permanentmagnetisch erregten Rotor aufweist, der innerhalb eines feststehenden, elektrisch ansteuerbaren Stators drehbar angeordnet ist. Der Rotor und der Stator können jeweils zwei oder mehrere Pole aufweisen und aus einer Mehrzahl von Blechen aufgebaut sein. Der Rotor und der Stator weisen einander zugewandte Flächen auf, zwischen denen sich ein Luftspalt befindet. Diese Flächen werden nachfolgend auch als Außenfläche des Rotors und Innenfläche des Stators bezeichnet.

In der Figur ist ein Verfahren 10 zur Herstellung des vorgenannten Elektromotors dargestellt.

In einem Schritt 11 wird der Rotor des Elektromotors vollständig montiert, so dass der Rotor funktionsfähig und damit einsatzbereit ist. Dies bedeutet, dass alle Bauteile des Rotors fertiggestellt und vollständig zusammengebaut werden. Die Außenfläche des Rotors weist dabei noch keine Einschnitte zur Verminderung von Ruckmomenten auf.

In einem Schritt 12 wird der Stator des Elektromotors vollständig montiert, so dass der Stator funktionsfähig und damit einsatzbereit ist. Dies bedeutet, dass alle Bauteile des Stators fertiggestellt und vollständig zusammengebaut werden. Die Innenfläche des Stators weist dabei noch keine Einschnitte zur Verminderung von Ruckmomenten auf.

In einem Schritt 13 werden der Rotor und der Stator zusammengebaut und die beiden zusammengebauten Bauteile werden in eine Vorrichtung eingesetzt, die einen Betrieb des Rotors innerhalb des Stators erlaubt. Die Vorrichtung ist derart ausgebildet, dass der Rotor und der Stator jeweils definierte Einbaupositionen besitzen. Weiterhin ist die Vorrichtung dazu geeignet, die Winkelstellung des Rotors innerhalb des Stators zu erfassen. Dies kann beispielsweise mit Hilfe eines entsprechenden Winkelsensors erreicht werden.

In einem Schritt 14 wird der Rotor innerhalb des Stators in eine Drehbewegung versetzt. Der Rotor weist dabei vorzugsweise eine im Wesentlichen konstante Drehzahl und/oder ein im Wesentlichen konstantes Drehmoment auf. Aufgrund der magnetischen Wechselwirkung zwischen den Polen des Stators und den Polen des Rotors entsteht ein Ruckmoment bzw. eine Rastkraft. Dies führt dazu, dass der Rotor einen zumindest geringfügig ungleichförmigen Lauf besitzt, also die Drehzahl bzw. das Drehmoment des Rotors zumindest geringfügig wellenförmig verläuft.

In einem Schritt 15 werden die vorstehend genannten Ruckmomente erfasst. Hierzu wird eine Größe ermittelt, die ein Ruckmoment des Rotors repräsentiert. Dies kann beispielsweise mit Hilfe eines entsprechenden Sensors erreicht werden, der dem Rotor zugeordnet ist.

Beispielsweise kann ein Drehzahlsensor vorhanden sein, mit dem die Drehzahl des Rotors dahingehend erfasst wird, dass auch geringfügige Drehzahlschwankungen erkennbar sind. Alternativ oder zusätzlich kann ein Drehmomentsensor vorhanden sein, mit dem das von dem Rotor erzeugte Drehmoment derart erfasst wird, dass auch geringfügige Drehmomentschwankungen erkennbar sind. Dabei ist es gegebenenfalls möglich, dass der bereits erwähnte Winkelsensor und der Drehzahlsensor und/oder der Drehmomentsensor ein gemeinsames Bauteil bilden.

Es wird darauf hingewiesen, dass die Ruckmomente auch andersartig erfasst werden können. So ist es möglich, dass dem Rotor oder der Vorrichtung ein Sensor zur Erfassung von Schwingungen zugeordnet ist. Aus derartigen Schwingungen kann ebenfalls auf die Ruckmomente geschlossen werden. Ebenfalls ist es möglich, dass nicht die Ruckmoments, sondern die Rastkräfte erfasst werden, die im Betrieb des Rotors entstehen. Entsprechend können gegebenenfalls auch andere, durch die Wechselwirkung der Pole des Rotors und des Stators entstehende Wirkungen erfasst werden.

In einem Schritt 16 werden die ermittelten Ruckmomente analysiert und es werden Winkelstellungen des Rotors ermittelt, bei denen Materialwegnahmen und/oder Materialhinzufügungen vorgenommen werden sollen. Es versteht sich, dass anstelle der Winkelstellungen auch andere Ortsdaten verwendbar sein können, mit denen ein Ort auf dem Rotor oder auf dem Stator eindeutig beschrieben werden kann. Weiterhin werden in dem Schritt 16 diejenigen Materialmengen ermittelt, die bei den vorgesehenen Materialwegnahmen und/oder Materialhinzufügungen weggenommen oder hinzugefügt werden sollen. Es versteht sich, dass anstelle der Materialmengen auch andere Mengendaten verwendbar sein können, mit denen eine Materialmenge eindeutig beschrieben werden kann. Dabei kann es sich beispielsweise um das Volumen eines Einschnitts in die Flächen des Rotors oder des Stators handeln.

Die Analyse der ermittelten Ruckmomente und die daraus resultierende Ermittlung von Ortsdaten und Mengendaten für die genannten Materialwegnahmen und/oder Materialhinzufügungen haben das Ziel, die ermittelten Ruckmomente zu vermindern oder vorzugsweise gegen Null gehen zu lassen. Die genannte Analyse und Ermittlung der Orts- und Mengendaten kann dabei auf mathematischen Grundlagen basieren, wie sie beispielsweise in der DE 28 23 208 A1 beschrieben sind. Alternativ kann dieser Vorgang aber auch auf rein empirischen Grundlagen ausgeführt werden. Es versteht sich, dass auch eine Kombination dieser Vorgehensweisen möglich ist.

Die Materialwegnahmen und/oder Materialhinzufügungen dienen - wie gesagt - dazu, die Ruckmomente zu vermindern oder gegen Null gehen zu lassen. Die Materialwegnahmen und/oder Materialhinzufügungen können in der Außenfläche des Rotors oder in der Innenfläche des Stators vorgesehen sein. Es versteht sich, dass auch Kombinationen hiervon möglich sind.

In einem Schritt 17 werden der Rotor und der Stator wieder auseinander gebaut und es werden die ermittelten Materialwegnahmen und/oder Materialhinzufügungen gemäß den ermittelten Orts- und Mengendaten auf der Außenfläche des Rotors und/oder auf der Innenfläche des Stators eingebracht bzw. aufgetragen. Es werden also an bestimmten Orten bestimmte Materialmengen von der Außenfläche des Rotors und/oder der Innenfläche des Stators abgetragen und/oder aufgetragen.

Die Orte und die Mengen der Materialwegnahmen und/oder Materialhinzufügungen sind - wie erläutert - abhängig von den ermittelten Orts- und Mengendaten und damit abhängig von den ermittelten Ruckmomenten. Damit sind die genannten Orte und Mengen abhängig von dem jeweils individuell vorhandenen Rotor und Stator. Vorhandene Bauteiltoleranzen oder Materialzusammensetzungen oder magnetischen Eigenschaften des Rotors und des Stators können damit zur Folge haben, dass die genannten Orte und Mengen zumindest geringfügig unsymmetrisch auf der Außenfläche des Rotors und/oder der Innenfläche des Stators vorhanden sind.

Bei den Materialwegnahmen kann es sich beispielsweise um linienförmige Einschnitte oder Vertiefungen handeln, während die Materialhinzufügungen beispielsweise als linienförmige Erhebungen ausgebildet sein können. Es versteht sich, dass die linienförmigen Einschnitte oder Erhebungen auch als aufeinanderfolgende Abschnitte oder Punkte oder Kombinationen davon ausgebildet sein können.

Im Hinblick auf die einzelnen Materialwegnahmen und/oder Materialhinzufügungen ist es möglich, dass diese immer gleichartig ausgeführt werden, also beispielsweise immer einen gleichartigen Verlauf und Ausgestaltung haben. Alternativ ist es aber auch möglich, dass die Materialwegnahmen und/oder Materialhinzufügungen in Abhängigkeit von der jeweiligen Winkelstellung des Rotors unterschiedlich ausgebildet sind. Die Materialwegnahmen und/oder Materialhinzufügungen können also bei unterschiedlichen Winkelstellungen auch unterschiedliche Breiten oder Längen oder Tiefen bzw. Höhen aufweisen.

Der vorgenannte Schritt 17 kann unter Zuhilfenahme der erläuterten Vorrichtung durchgeführt werden. Es ist aber auch möglich, dass der Rotor und der Stator aus der Vorrichtung ausgebaut und der Schritt 17 anderweitig ausgeführt wird.

Nach dem Schritt 17 wird in einem Schritt 18 die Endmontage des Elektromotors vorgenommen. Der Rotor wird also wieder in den Stator eingebaut und der gesamte Elektromotor wird fertiggestellt. Danach ist der Elektromotor einsatzbereit.

Das erläuterte Verfahren kann dahingehend verändert werden, dass nach dem Schritt 17 nicht sofort die Endmontage gemäß dem Schritt 18 folgt, sondern dass das Verfahren nach dem Schritt 17 erneut mit den Schritten 13 bis 17 fortgesetzt wird. Dies ist in der Figur durch das Bezugszeichen 19 angedeutet.

Der Rotor und der Stator werden also wieder in die Vorrichtung eingebaut und es werden erneut die Ruckmomente erfasst. Aufgrund der vorgenommenen Materialwegnahmen und/oder Materialhinzufügungen müssten die nunmehr ermittelten Ruckmomente geringer sein als bei dem vorhergehenden Durchlauf durch die Schritte 13 bis 15. Die nunmehr ermittelten Ruckmomente werden bei dem nachfolgenden, erneuten Durchlauf durch die Schritte 16 und 17 dazu verwendet, gegebenenfalls weitere Materialwegnahmen und/oder Materialhinzufügungen auf der Außenfläche des Rotor und/oder der Innenfläche des Stators hinzuzufügen.

Dieser rekursive Ablauf 19 der Schritte 13 bis 17 kann dann so lange wiederholt werden, bis die ermittelten Ruckmomente einen erwünschten Schwellwert unterschreiten oder Null sind.

Das erläuterte Verfahren kann auch dahingehend verändert werden, dass die beschriebene Vorrichtung bereits einen Stator aufweist. Der Schritt 13 entfällt somit. In den vorhandenen Stator werden alle herzustellenden Rotoren eingebaut und innerhalb der Vorrichtung betrieben. Der genannte Stator stellt insoweit einen Referenzstator dar. In diesem Fall werden die Materialwegnahmen und/oder Materialhinzufügungen nur für Orts- und Mengendaten auf der Außenfläche des Rotors ermittelt und auch nur dort vorgenommen.

Das erläuterte Verfahren kann weiterhin auch dahingehend verändert werden, dass die beschriebene Vorrichtung keinen Stator aufweist und auch ansonsten kein Stator für die Durchführung des Verfahrens erforderlich ist. Stattdessen ist eine Sonde vorhanden, die dazu geeignet ist, die magnetische Flussdichte des magnetisch erregten Rotors über den Drehwinkel des Rotors, beispielsweise über eine Umdrehung des Rotors zu ermitteln. Diese winkelabhängig ermittelte magnetische Flussdichte wird dann analysiert und es werden daraus die erläuterten Orts- und Mengendaten abgeleitet. In Abhängigkeit von diesen Orts- und Mengendaten werden dann die erläuterten Materialwegnahmen und/oder Materialhinzufügungen auf der Außenfläche des Rotors vorgenommen.

Es versteht sich, dass anstelle der magnetischen Flussdichte auch eine andere magnetische oder elektromagnetische Größe des Rotors von der Sonde ermittelt werden kann. Ebenfalls versteht es sich, dass die Sonde auch dann in entsprechender Weise zur Anwendung kommen kann, wenn nicht der Rotor, sondern der Stator magnetisch erregt ist.

Das erläuterte Verfahren kann auch dahingehend verwendet werden, dass die Materialwegnahmen und/oder Materialhinzufügungen gleichzeitig dazu verwendet werden, den Rotor zu wuchten. Alternativ kann das erläuterte Verfahren gegebenenfalls mit einem Verfahren zum Wuchten des Rotors kombiniert werden oder zumindest in derselben Vorrichtung durchgeführt werden wie ein derartiges Verfahren zum Wuchten des Rotors.

## Patentansprüche

1. Verfahren zur Herstellung eines Elektromotors, wobei der Elektromotor einen Rotor und einen Stator aufweist, die mit einander zugewandten Flächen versehen sind, zwischen denen sich ein Luftspalt befindet, **dadurch gekennzeichnet, dass** eine Größe ermittelt wird (15), die ein Ruckmoment des Rotors repräsentiert, dass in Abhängigkeit von der ermittelten Größe Orts- und Mengendaten des Rotors oder des Stators ermittelt werden (16), die eine Materialwegnahme oder eine Materialhinzufügung beschreiben, und dass die Materialwegnahme oder die Materialhinzufügung an dem ermittelten Ort und mit der ermittelten Menge auf der Fläche des Rotors oder des Stators eingebracht oder aufgetragen wird (17).

2. Verfahren nach Anspruch 1, wobei als Größe, die ein Ruckmoment des Rotors repräsentiert, eine Drehzahl und/oder ein Drehmoment des Rotors verwendet wird.

3. Verfahren nach Anspruch 1 oder 2, wobei als Ort des Rotors oder des Stators eine Winkelstellung verwendet wird.

4. Verfahren nach einem der vorstehenden Ansprüche, wobei die genannten Schritte wiederholt werden.

5. Verfahren nach einem der vorstehenden Ansprüche, wobei die Materialwegnahme oder die Materialhinzufügung nur auf der Fläche des Rotors vorgenommen wird.

6. Elektromotor mit einem Rotor und einem Stator, die mit einander zugewandten Flächen versehen sind, zwischen denen sich ein Luftspalt befindet, **dadurch gekennzeichnet, dass** der Elektromotor nach einem der vorstehenden Ansprüche hergestellt ist.

7. Elektromotor nach Anspruch 6, wobei der Rotor mehrere permanentmagnetisch erregte Pole aufweist, und wobei der Stator mehrpolig ausgebildet und elektrisch ansteuerbar ist.
